# EUROPEAN PATENT SPECIFICATION

(11) **EP 2 831 980 B1**
(45) Date of publication and mention of the grant of the patent: **30.07.2025**
(21) Application number: 13770331.0
(22) Date of filing: 14.03.2013
(51) Int. Cl.: H02K 1/27, H02K 9/04, H02K 21/38

(54) **FLUX DIRECTING, POLE SPAN SETTING, FEATURE ON ROTOR LAMINATION OF AIR-COOLED ELECTRIC MOTOR/GENERATOR**
FLUSSMITTELLEITUNGS- UND POLSPANNWEITENEINSTELLUNGSFUNKTION AUF EINER ROTORBESCHICHTUNG EINES LUFTGEKÜHLTEN ELEKTROMOTORS/GENERATORS
ORIENTATION DE FLUX, DÉFINITION DE PORTÉE, ATTRIBUT SUR LA STRATIFICATION DE ROTOR DE MOTEUR/GÉNÉRATEUR ÉLECTRIQUE REFROIDI PAR AIR

(30) Priority: 30.03.2012 US 201261618259 P
(43) Date of publication of application: 04.02.2015
(73) Proprietor: Zapi S.p.A., 42028 Poviglio (RE) (IT)
(72) Inventor: COULSON, David, Radford, VA 24141 (US); HODGE, Gary, Dublin, VA 24084 (US)
(74) Representative: Grünecker Patent- und Rechtsanwälte PartG mbB
(86) International application number: PCT/US2013/031349
(87) International publication number: WO 2013/148245

(56) References cited:
- EP-A1- 0 884 237
- CN-A- 1 476 146
- US-A- 3 335 377
- US-A1- 2008 018 190
- US-A1- 2008 203 846
- US-B1- 6 274 960
- US-B1- 6 376 957
- US-B1- 6 847 144

## Description

This application claims the priority of U.S. Provisional Application Serial No. 61/618,259, filed March 30, 2012, the entire disclosure of which is incorporated by reference into the present application.

### BACKGROUND OF THE INVENTION

### Field of the Invention

The present invention concerns a pole span defining feature included in a rotor lamination forming part of a lamination stack constituting the rotor of an electric machine such as an AC motor, generator, or motor/generator with recess or channels to promote rotor cooling.

### Description of Related Art

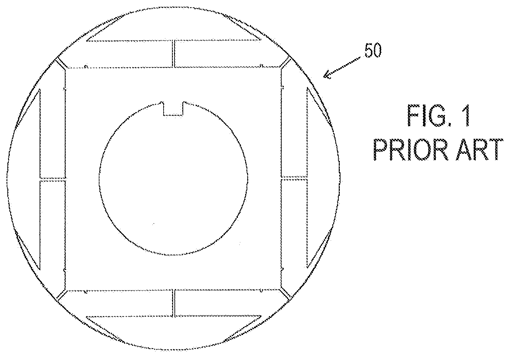

Figure 1 of the present application illustrates a known interior permanent magnet rotor lamination 50. The winged features illustrated in Figure 1 set a span that influences flux flow across the air gap between the winged features. During loaded conditions, when armature reaction influences the flux flow from the rotor to the stator, the pole span set by the winged features provides an optimized flow path to maximize output power from the generator. During unloaded conditions, the optimized pole span allows for a higher internal generator voltage (maximized BEMF of the machine). After testing, it was determined that inner polar cooling channels in the rotor formed by a stack of the laminations 50 should be present to allow for air flow through the generator, and, in subsequent designs, scallops were inserted in the inner polar areas of the rotor lamination, eliminating the possibility of using traditional pole span approaches such as those incorporating rotor laminations having configurations as shown in Figure 1.

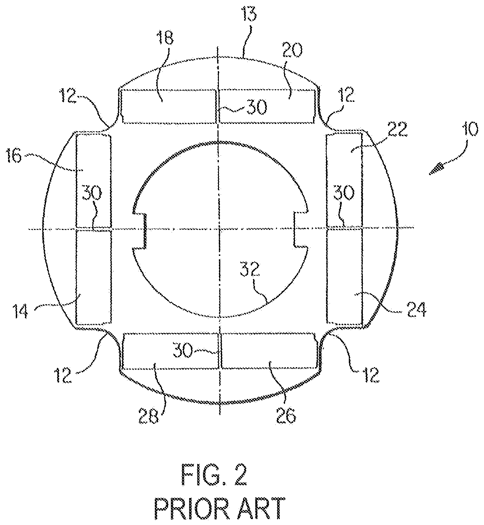

U.S. Patent Application Publication 2012/0074801 to Brown, et al. discloses a magnetic rotor with inset bridges to promote cooling. Figure 2 of the present application corresponds to Figure 1 of the Brown, et al. ('801) publication, and illustrates a known interior permanent magnet rotor lamination 10, in plan view, with scallops or indentations 12 on the rotor outer diameter 13. The rotor lamination illustrated in Figure 2, again, is a single layer interior permanent magnet rotor lamination. Each indentation 12 is located between adjacent pairs of magnet receiving voids or orifices 14 and 16, 18 and 20, 22 and 24, and 26 and 28, and each magnet receiving void or orifice of these pairs is separated from the other such void or orifice by a thin bridge 30 of rotor lamination material. In operation, permanent magnets (not shown) are affixed within the voids or orifices to cooperate with windings disposed around poles of a stator, within which the rotor lamination 10 is rotatable. A rotor shaft (not shown) is receivable within a shaft opening 32 to impart rotational motion to the rotor.

Other documents that may be of interest are U.S. Patent 3,364,672 to Pfeffer, U.S. Patent 5,051,634 to Overton, U.S. Patent 7,057,323 to Horst, U.S. Patent Application Publication 2005/0140236 A1 to Jeong et al., U.S. Patent Application Publication 2006/0119203 A1 to Brown et al., U.S. Patent Application Publication 2007/0103024 A1 to Nakayama et al., U.S. Patent Application Publication 2008/0030108 A1 to Trago et al., U.S. Patent Application Publication 2008/0224558 A1 to Ionel, and U.S. Patent Application Publication 2009/0224624 to Kumar et al.

CN1476146A discloses a rotor according to the preamble of claim 1.

The IEEE paper Waveform Optimization of an AC Converter Machine, published May 25, 1989, identifying F. Wang as its author, teaches the value of square wave waveforms for improving the power out of a machine for a given size. This is achieved via a six phase machine and a linearly varying gap.

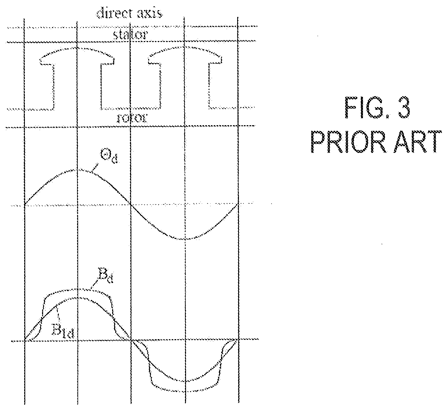

Figure 3 illustrates standard pole shaping for large synchronous generators that is used for creating a more sinusoidal BEMF, as opposed to increasing a magnitude of the fundamental BEMF.

### SUMMARY OF THE INVENTION

According to the present invention, a rotor according to claim 1 is provided.

A flux directing pole cap is provided at the outside diameter of the rotor lamination. This pole cap is a non-circular feature, and serves to set the pole span of the machine. The non- circular pole cap is implemented into the lamination by cutting an arc in the outside diameter directly over the magnet pole. By including such features in rotor laminations, an attempt is made to provide maximum voltage to the generator load under loaded conditions. Benefits of the flux directing pole cap are optimized internal generator voltage, lowered inductance, lowered reactance, and an increased power factor. These combinations help increase generator efficiency.

In the process of designing a three phase permanent magnet generator, it was observed that different pole span settings provided different output voltages under certain load conditions. One design objective is to optimize the pole span to provide the highest voltage at generator loads. This characteristic helps minimize magnet material and coil turns. Pole span selection also directly impacts other generator parameters, such as inductance and reactance.

In one preferred arrangement, a rotor, formed from a plurality of laminations joined together, is mountable on a shaft for rotation relative to a stator of a rotary electric machine arrangement. The multilayer laminated rotor has a solid section that surrounds an opening within which the shaft is receivable. The solid section includes an outside diameter, magnet receiving voids, and steps delimiting a plurality of pole spans from flux directing features at sides of each of the pole spans. Adjacent flux directing features between adjacent pole spans are disposed on opposite sides of scalloped areas or other such recesses permitting cooling air flow past the rotor.

Each of the recesses mentioned permitting cooling air flow defines a scalloped area in the solid section, and the solid section mentioned defines a plurality of rotor poles, each of which includes a pair of the flux directing features, a single pole span between the flux directing features, and one of the steps located between each of the flux directing features and the single pole span. Each of the rotor poles, moreover, includes a pair of the magnet receiving voids, and each of the steps is disposed directly over one of the magnet receiving voids. The flux directing features permit air flow past the rotor between the recesses and the pole spans.

Selection of the pole spans may be made based on at least one of a maximum internal generator voltage, a minimum phase inductance, and a minimum generator reactance. In one particular arrangement contemplated, the rotor includes four rotor poles that cooperate with a thirty six slot stator. The pole spans, steps, and flux directing features mentioned provide an air gap of varying cross section between the rotor and a stator associated with the rotor, with the air gap being at a minimum between the pole spans and the stator.

### BRIEF DESCRIPTION OF THE DRAWING FIGURES

Figure 1, discussed above, is a plan view of a known interior permanent magnet rotor lamination having winged features that influence flux flow.
Figure 2, discussed above, illustrates a known interior permanent magnet rotor lamination, in plan view, with scallops or indentations on the rotor outer diameter to permit cooling fluid flow.
Figure 3, discussed above, illustrates standard pole shaping for large synchronous generators.
Figure 4 illustrates a rotor having flux directing pole cap features according to the present invention.
Figure 5 is an enlarged view of a part of Figure 4.
Figure 6 is a schematic illustration of the lines of magnetic flux in an arrangement having a rotor configured in accordance with the present invention.

### DETAILED DESCRIPTION OF THE INVENTION

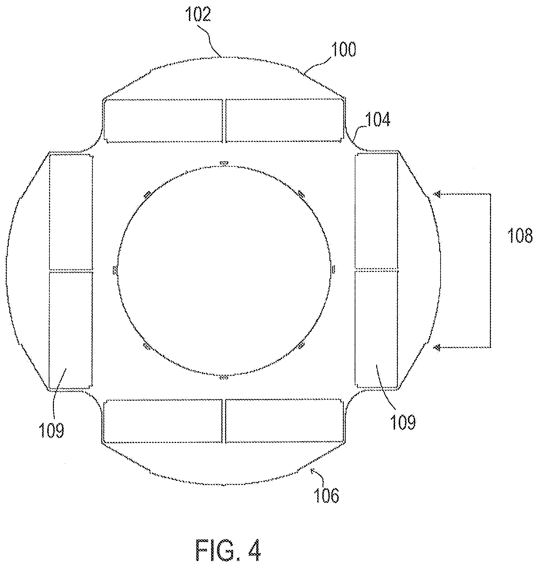

As shown in Figure 4, according to the present invention, a flux directing pole cap feature 100 is provided at the outside diameter 102 of a rotor lamination forming part of an overall laminated rotor 106. This pole cap feature 100 is non circular, and serves to set the pole span 108 of the machine. The non-circular pole cap feature 100 is implemented into the lamination by cutting arcs at the outside diameter 102 directly over the magnet pole. Although such characteristics are not to be considered limiting, in one configuration of the invention, the machine is a four pole, 36 slot generator designed to operate at 45 to 60 Hz and provide a minimum of 338 VAC at 45 Hz and 449 VAC at 60 Hz.

In conventional arrangements, buried magnet or interior permanent magnet designs originally had small inner polar cooling channels, and a pole span could be set in a traditional manner, supported by prior art. In the known interior permanent magnet rotor lamination 50 of Figure 1, for example, this approach was accomplished using wing features that extend toward one another and set an angular distance above the pole.

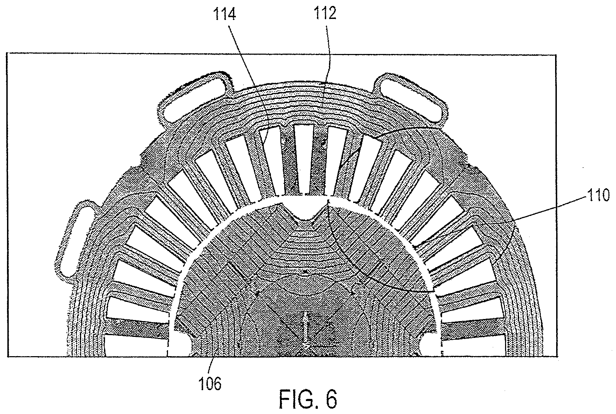

In the alternative pole span delineating approach of the present invention, non-circular pole cap arcs or other features 100 are implemented into the lamination by designing arcs above the magnet pole on the outside diameter 102 of the rotor 106 just above the magnet receiving voids, orifices, or slots 109. Areas of the rotor 106 between the poles (inner polar) includes scalloped areas 104 that allow air to flow axially through the rotor 106. The radial magnetic air gap 110 (Figure 6) is at a minimum on the rotor lamination outside diameter 102 in the area above the permanent magnets received in the voids 109, and gets larger in the area of the lamination outside of a pole span 108 but between the pole cap arcs or other features 100 and the scalloped areas 104 forming air flow regions. This variable air gap influences the flux and directs it to the arced section of the rotor 106 more exactly above the magnets. This becomes particularly important for maximizing flux linkage with reactive loads; as the loads become more reactive, the current angle shifts away from the voltage in the generator system. When this occurs, armature reaction will try to divert the flux in areas that are not beneficial to voltage production. The pole cap serves to guide the flux across the gap, minimizing the effect of armature reaction and maximizing generator output voltage. Figure 6 is a schematic illustration of the lines of magnetic flux in an arrangement having the rotor 106 rotationally disposed within a stator 112 having stator teeth 114 and associated wire coils (not shown).

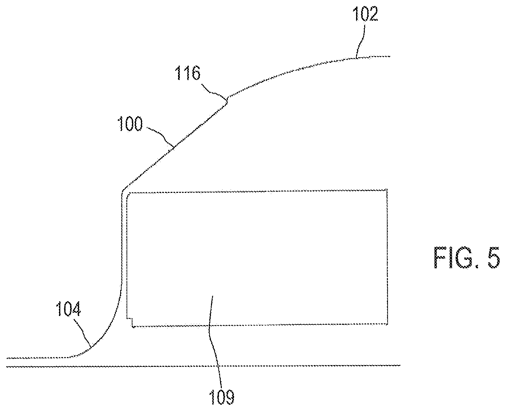

Figure 5 is an enlarged view of a part of Figure 4 showing one of the scalloped areas 104 adjacent one of the magnet receiving voids, orifices, or slots 109 of the rotor 106. The non-circular pole cap arcs or other features 100 are delineated with respect to the pole span 108 (Figure 4) of the illustrated rotor lamination by a step down feature 116 that can more concisely be referred to simply as a "step." Such step down features serve to increase output voltage and, as shown in Figure 6, focus the flux in the teeth aligned with the magnets received within the voids.

As noted above, by including such features in rotor laminations, an attempt is made to provide maximum voltage to the generator load under loaded conditions. Benefits of the flux directing pole cap are optimized internal generator voltage, lowered inductance, lowered reactance, and an increased power factor. These combinations help increase generator efficiency.

Pole span selection is optimized by providing a maximum internal generator voltage, a minimum phase inductance, and a minimum generator reactance. By decreasing generator reactance, the power factor of the complete system increased, increasing efficiency. The reduction of inductance due to an optimized pole span lowers the voltage drop across the generator internal impedance during loaded conditions, increasing the generator output power.

The invention should be readily observable, is operable as evidenced by way of its use on certain prototypes, and increases the voltage generated by 5.6% relative to arrangements without a step down feature.

The foregoing disclosure has been set forth merely to illustrate the invention and is not intended to be limiting. Modifications of the disclosed embodiments incorporating the substance of the invention may occur to persons skilled in the art, and the invention should be construed to include everything within the scope of the invention ultimately claimed.

## Claims

1. A rotor (106) mountable on a shaft for rotation relative to a stator (112) of a rotary electric machine arrangement, comprising:
a solid section surrounding an opening within which the shaft is receivable, the solid section including an outside diameter (102), magnet receiving voids (109), and pairs of steps (116) delimiting a plurality of pole spans (108) from flux directing features (100) at sides of each of the pole spans (108),
wherein adjacent flux directing features (100) between adjacent pole spans (108) are disposed on opposite sides of recesses (104) permitting cooling airflow past the rotor, the flux directing features (100) on either side of each recess (104) being of equal length,
wherein the solid section defines a plurality of rotor poles,
wherein each of said rotor poles includes a pair of the magnet receiving voids (109), and a pair of steps (116), and each of the steps (116) is disposed directly over one of the magnet receiving voids (109), and
wherein each of said rotor poles further includes a pair of said flux directing features (100), a single one of said pole spans (108) between the flux directing features (100), and the steps (116) located between each of the flux directing features (100) and the single pole span (108),
**characterized in that**
the flux directing features (100) on either side of each recess (104) being straight, and **in that**
the rotor (106) has a plurality of laminations joined together.

2. The rotor (106) of claim 1, wherein the flux directing features (100) are configured to permit air flow past the rotor (106) between the recesses (104) and the pole spans (108).

3. The rotor (106) of claim 1, wherein the rotor poles are further configured to provide at least one of a maximum internal generator voltage, a minimum phase inductance and a minimum generator reactance.

4. The rotor (106) of claim 1, wherein the rotor (106) includes four rotor poles for cooperating with a thirty six slot stator.

5. The rotor (106) of claim 1, wherein the pole spans (108), steps (116), and flux directing features (100) provide an air gap of varying cross section between the rotor (106) and a stator (112) associated with the rotor (106).

6. The rotor (106) of claim 5, wherein the air gap is at a minimum between the pole spans (108) and the stator (112).

7. A rotary electric machine arrangement including a rotor (106) according to claim 1 and the stator (112).

8. The arrangement of claim 7, wherein the flux directing features (100) permit air flow past the rotor (106) between the recesses (104) and the pole spans (108).

9. The arrangement of claim 7, wherein the rotor poles are configured to provide at least one of a maximum internal generator voltage, a minimum phase inductance, and a minimum generator reactance.

10. The arrangement of claim 7, wherein the rotor (106) includes four rotor poles for cooperating with a thirty six slot stator.

## Patentansprüche

1. Ein Rotor (106), der auf einer Welle montiert werden kann, um sich relativ zu einem Stator (112) einer rotierenden elektrischen Maschinenanordnung zu drehen, umfassend:
einen massiven Abschnitt, der eine Öffnung umgibt, in der die Welle aufgenommen werden kann, wobei der massive Abschnitt einen Außendurchmesser (102), magnetaufnehmende Hohlräume (109) und Stufenpaare (116) umfasst, die eine Vielzahl von Polspannweiten (108) von Flussleitelemente (100) an den Seiten jeder der Polspannweite (108) begrenzen,
wobei benachbarte Flussleitelemente (100) zwischen benachbarten Polspannweiten (108) auf gegenüberliegenden Seiten von Aussparungen (104) angeordnet sind, die einen Kühlluftstrom am Rotor vorbei ermöglichen, wobei die Flussleitelemente (100) auf jeder Seite jeder Aussparung (104) gleich lang sind,
wobei der massive Abschnitt eine Vielzahl von Rotorpolen definiert,
wobei jeder der Rotorpole ein Paar der magnetaufnehmenden Hohlräume (109) und ein Paar von Stufen (116) umfasst, und jede der Stufen (116) direkt über einem der magnetaufnehmenden Hohlräume (109) angeordnet ist, und
wobei jeder der Rotorpole ferner ein Paar der Flussleitelemente (100), eine einzelne der Polspannweite (108) zwischen den Flussleitelementen (100) und die zwischen jedem der Flussleitelemente (100) und der einzelnen Polspannweite (108) angeordneten Stufen (116) umfasst,
**dadurch gekennzeichnet, dass**
die Flussleitelemente (100) auf beiden Seiten jeder Aussparung (104) gerade sind und dass
der Rotor (106) eine Vielzahl von miteinander verbundenen Lamellen aufweist.

2. Der Rotor (106) nach Anspruch 1, wobei die Flussleitelemente (100) so konfiguriert sind, dass sie einen Luftstrom am Rotor (106) zwischen den Aussparungen (104) und den Polspannweiten (108) vorbeiführen.

3. Der Rotor (106) nach Anspruch 1, wobei die Rotorpole ferner so konfiguriert sind, dass sie mindestens eine maximale interne Generatorspannung, eine minimale Phaseninduktivität und/oder eine minimale Generatorreaktanz bereitstellen.

4. Der Rotor (106) nach Anspruch 1, wobei der Rotor (106) vier Rotorpole zum Zusammenwirken mit einem Stator mit sechsunddreißig Nuten umfasst.

5. Der Rotor (106) nach Anspruch 1, wobei die Polspannweite (108), Stufen (116) und Flussleitelemente (100) einen Luftspalt mit variierendem Querschnitt zwischen dem Rotor (106) und einem mit dem Rotor (106) verbundenen Stator (112) bereitstellen.

6. Der Rotor (106) nach Anspruch 5, wobei der Luftspalt zwischen den Polspannweiten (108) und dem Stator (112) minimal ist.

7. Eine Anordnung einer rotierenden elektrischen Maschine mit einem Rotor (106) nach Anspruch 1 und dem Stator (112).

8. Die Anordnung nach Anspruch 7, wobei die Flussleitelemente (100) eine Luftströmung an dem Rotor (106) vorbei zwischen den Aussparungen (104) und den Polspannweiten (108) ermöglichen.

9. Die Anordnung nach Anspruch 7, wobei die Rotorpole so konfiguriert sind, dass sie mindestens eine maximale interne Generatorspannung, eine minimale Phaseninduktivität und/oder eine minimale Generatorreaktanz bereitstellen.

10. Die Anordnung nach Anspruch 7, wobei der Rotor (106) vier Rotorpole zum Zusammenwirken mit einem Stator mit sechsunddreißig Nuten umfasst.

## Revendications

1. Rotor (106) montable sur un arbre pour une rotation par rapport à un stator (112) d'un équipement de machine électrique rotative, comprenant :
une section solide entourant une ouverture dans laquelle l'arbre peut être reçu, la section solide comportant un diamètre extérieur (102), des vides de réception d'aimant (109), et des paires de marches (116) délimitant une pluralité d'intervalles de pôles (108) par rapport à des attributs d'orientation de flux (100) sur les côtés de chacun des intervalles de pôles (108),
dans lequel des attributs d'orientation de flux (100) adjacents entre des intervalles de pôles (108) adjacents sont disposés sur des côtés opposés d'évidements (104) permettant une circulation d'air de refroidissement au-delà du rotor, les attributs d'orientation de flux (100) sur chaque côté de chaque évidement (104) étant de longueur égale,
dans lequel la section solide définit une pluralité de pôles de rotor,
dans lequel chacun desdits pôles de rotor comporte une paire des vides de réception d'aimant (109), et une paire de marches (116), et chacune des marches (116) est disposée directement au-dessus de l'un des vides de réception d'aimant (109), et
dans lequel chacun desdits pôles de rotor comporte en outre une paire desdits attributs d'orientation de flux (100), un intervalle unique desdits intervalles de pôles (108) entre les attributs d'orientation de flux (100), et les marches (116) situées entre chacun des attributs d'orientation de flux (100) et l'intervalle de pôles unique (108),
**caractérisé en ce que**
les attributs d'orientation de flux (100) sur chaque côté de chaque évidement (104) sont rectilignes, et **en ce que**
le rotor (106) a une pluralité de laminations assemblées ensemble.

2. Rotor (106) selon la revendication 1, dans lequel les attributs d'orientation de flux (100) sont configurés pour permettre une circulation d'air au-delà du rotor (106) entre les évidements (104) et les intervalles de pôles (108).

3. Rotor (106) selon la revendication 1, dans lequel les pôles de rotor sont en outre configurés pour fournir au moins l'une parmi une tension maximale de générateur interne, une inductance de phase minimale et une réactance minimale de générateur.

4. Rotor (106) selon la revendication 1, dans lequel le rotor (106) comporte quatre pôles de rotor pour coopérer avec un stator à trente-six fentes.

5. Rotor (106) selon la revendication 1, dans lequel les intervalles de pôles (108), les marches (116), et les attributs d'orientation de flux (100) fournissent un espace d'air de section transversale variable entre le rotor (106) et un stator (112) associé au rotor (106).

6. Rotor (106) selon la revendication 5, dans lequel l'espace d'air est minimal entre les intervalles de pôles (108) et le stator (112).

7. Équipement de machine électrique rotative comportant un rotor (106) selon la revendication 1 et le stator (112).

8. Équipement selon la revendication 7, dans lequel les attributs d'orientation de flux (100) permettent une circulation d'air au-delà du rotor (106) entre les évidements (104) et les intervalles de pôles (108).

9. Équipement selon la revendication 7, dans lequel les pôles de rotor sont configurés pour fournir au moins l'une parmi une tension maximale de générateur interne, une inductance de phase minimale et une réactance minimale de générateur.

10. Équipement selon la revendication 7, dans lequel le rotor (106) comporte quatre pôles de rotor pour coopérer avec un stator à trente-six fentes.
